# EUROPEAN PATENT SPECIFICATION

(11) **EP 2 581 650 B1**
(45) Date of publication and mention of the grant of the patent: **02.09.2015**
(21) Application number: 12188345.8
(22) Date of filing: 12.10.2012
(51) Int. Cl.: F21Y 101/02, F21S 9/03

(54) **Garden lighting**
Gartenleuchte
Lumière de jardin

(30) Priority: 14.10.2011 NL 2007601
(43) Date of publication of application: 17.04.2013
(73) Proprietor: Hemsson B.V., 7642 NP Wierden (NL)
(72) Inventor: Achterhuis, Herman Johan, 7642 NP Wierden (NL)
(74) Representative: Jansen, Cornelis Marinus

(56) References cited:
- DE-U1- 20 307 319
- GB-A- 2 421 784
- US-A1- 2009 059 572

## Description

The invention relates to lighting, more particularly garden lighting.

From US2005/0207147 and US 7,172,307, garden lighting is known provided with LEDs and solar cells and a battery which is charged through solar cells. US 2009/0059572 discloses a garden light according to the preamble of claim 1, which is provided with a connecting pin provided adjacent one end with external thread. On the thread, a first flange is mounted which extends perpendicularly to a longitudinal centre line of the connecting pin. A translucent lampshade is connected by screws to a housing. In the housing, a battery is included. Adjacent an upper side of the housing a solar cell assembly is provided. Adjacent a lower side of the housing a number of LEDs are provided. In the housing, a circuit is included which connects the LEDs to the battery and which is designed for switching the LEDs on and off. Further included in the housing is a circuit which connects the solar cell assembly to the battery and which is designed to control the charging of the battery with the aid of the solar cell assembly.

The present invention intends to provide a new type of garden lighting that can be compactly packaged in that it is demountable and easily mountable, and which is particularly intended for creating a cozy atmosphere, while furthermore, an amount of light is provided that is such that one can read by this new type of garden lighting.

To this end, the invention provides a garden light according to claim 1. Distinctive with regard to US2009/0059572 is that the housing with the battery included therein, the solar cell assembly, the number of LEDs, the circuit for switching the LEDs on and off and the circuit for controlling the charging of the battery together form a lighting unit, wherein the lighting unit is provided with a central through opening in the housing which extends through the entire housing, wherein the lampshade is provided with a top wall which is connected to the translucent outer wall and which is provided with a central opening designed for receiving the connecting pin, wherein in a mounted condition the connecting pin extends through the central through opening in the housing and through the central opening in the top wall for connection of the lighting unit and the lampshade to the connecting pin, wherein the garden light is provided with a fastening means, such as a bolt or nut, provided with thread which is designed for cooperation with the thread of the connecting pin and which engages an outside of the housing of the lighting unit for pressing the lighting unit against the first flange.

The means for providing the light, such as the LEDs, the solar cells, the various circuits and the battery, are accommodated in a single lighting unit which comprises a housing. Under normal circumstances, an inside of the housing is not accessible to water. The moisture sensitive parts of the lighting unit are included in the inside of the housing. Here, the fastening means engages an outside of the housing so that it is not necessary to open the housing in order to access the fastening means. The fastening means is easily accessible from the outside, which makes demounting of the lighting unit from the garden light simple. The through opening in the housing is also bounded by walls of the housing, so that the inside space of the housing is indeed sealed off in a splash-proof manner. Thus, a garden light is obtained which can be easily assembled and disassembled and which can be compactly packaged for dispatch. The translucent lampshade provides a cozy luminosity and can thus serve as a beacon. Furthermore, the translucent lampshade can ensure that the light is directed downwards so that it is quite sufficient for reading.

In one embodiment, the entire lighting unit can be simply detached from the lampshade and optionally separately charged via an external charging unit which can be supplied as an accessory.

Further elaborations of the invention are described in the subclaims and will be further elucidated hereinbelow on the basis of a number of exemplary embodiments with reference to the drawings.
Fig. 1 shows a perspective view of an example of an embodiment of the garden light;
Fig. 2 shows a perspective, exploded view of the top part of the example of Fig. 1;
Fig. 3 shows a perspective, exploded view of the lighting unit of the example of Fig. 1;

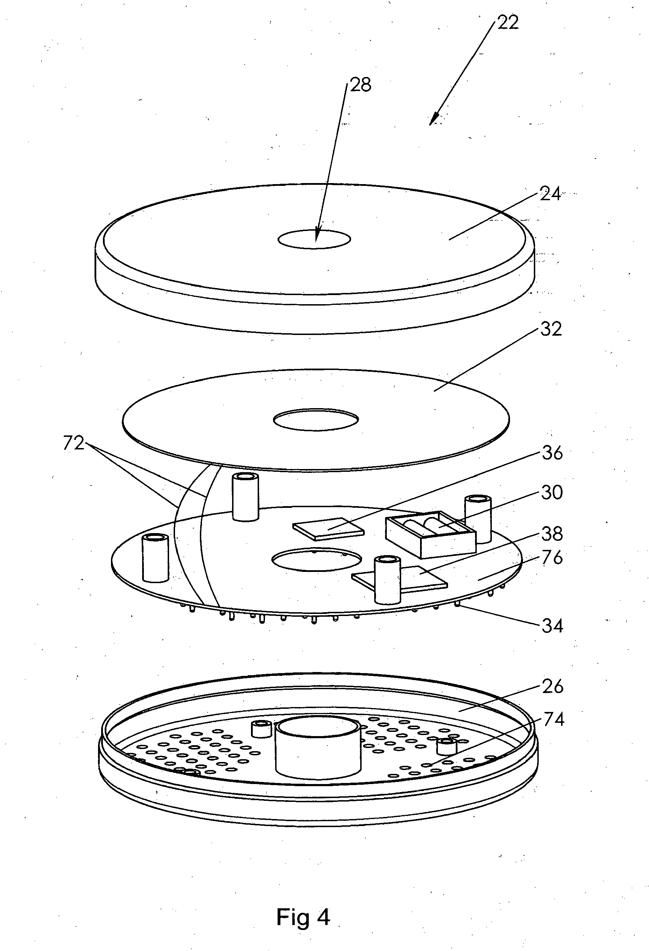

Fig. 4 shows a second perspective, exploded view of the lighting unit of the example of Fig. 1;

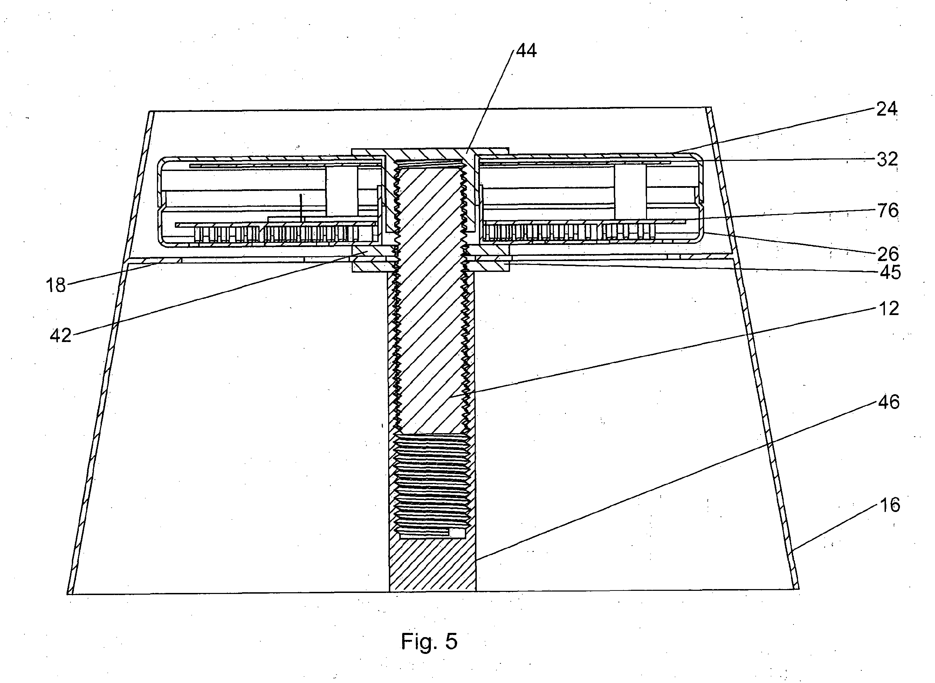

Fig. 5 shows a longitudinal cross section at the location of the lampshade of the example of Fig. 1;
Fig. 6 shows a perspective view of the lampshade of the example of Fig. 1;

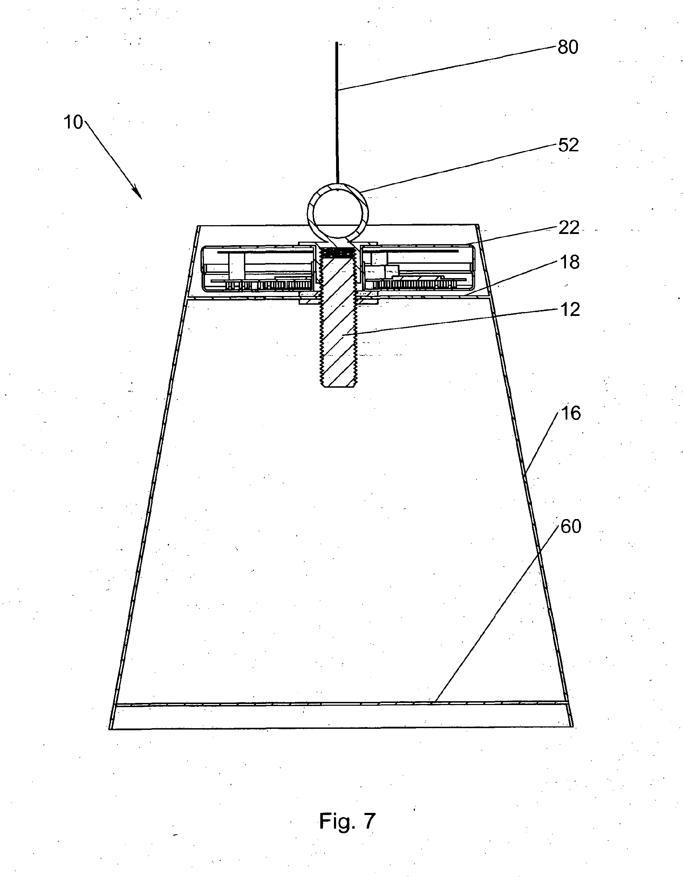

Fig. 7 shows a garden light which is suitable to be suspended; and
Fig. 8 shows an embodiment which is suitable to be mounted to the wall.

The Figures show an example of a garden light in which different embodiments of the invention are embodied. The embodiments will be discussed hereinafter on the basis of the example. However, it is noted that the embodiments can also be embodied in different forms than represented in the example in the drawings.

In its broadest description, the garden light 10 is provided with a connecting pin 12, a translucent lampshade 14 and a lighting unit 22. The lighting unit 22 is provided with a housing 24, 26. In one embodiment, of which an example is shown in the Figures, the housing is provided with an upper part 24 and a lower part 26. The upper part is preferably of transparent design. Preferably, the housing 24, 26 is watertight. In the housing 24, 26, a central through opening 28 is provided which is designed for passing the connecting pin 12 for connecting the lighting unit 22 to the connecting pin 12.

In the housing 24, 26, a battery 30 is included. The lighting unit 22 is further provided with a solar cell assembly 32, which is provided adjacent an upper side of the housing 24, 26, and with a number of LEDs 34 (light emitting diodes) which are provided in or at a lower side of the housing 24, 26. In the housing 24, 26 is a circuit 36 which connects the LEDs 34 to the battery 30 and which is designed for switching the LEDs 34 on and off. Further, a circuit 38 is included in the housing 24, 26, which connects the solar cell assembly 32 to the battery 30 and which is designed for controlling the charging of the battery 30 with the aid of the solar cell assembly 32. It will be clear that the two circuits 36, 38 can be integrated in a single circuit.

In one embodiment, of which an example is shown in the Figures, the circuits 36, 38, the battery 30, and the LEDs 34 can all be mounted on a printed circuit board 76 which is fastened in the housing 24, 26. The solar cell assembly 32 can be connected to the circuit board with electric conductors 72.

As stated, the housing 24, 26 is preferably watertight. With such a watertight design, the lower part 26 is preferably also of transparent design. In an alternative embodiment, recesses 74 can be provided in the lower part 26 for allowing the light that is emitted by the LEDs 34 to pass. As the recesses 74 are located at the lower side of the lighting unit 22, rain water will not penetrate into the housing 24, 26 via these recesses 74.

The translucent lampshade 14 is provided with a translucent outer wall 16 and a top wall 18 which is connected to the translucent outer wall 16. The top wall is provided with a central opening 20 designed for receiving the connecting pin 12 for connecting the lampshade 14 to the connecting pin 12.

In one embodiment, of which an example is shown in the Figures, the lighting unit 22 in a mounted condition is positioned above the top wall 18. The top wall 18 can be provided with recesses 40 whose positions correspond with the positions of the LEDs 34 on the housing 24, 26 of the lighting unit 22, such that the LEDs 34 shine directly into the space present below the top wall 18 and which is surrounded by the outer wall 16 of the lampshade 14.

In one embodiment, of which an example is shown in the Figures, thread may be provided on or in the connecting pin 12. In such an embodiment, a first flange 42 extends perpendicularly to a longitudinal centre line L of the connecting pin 12. This first flange 42 can be fixedly connected to the connecting pin 12, but can also be connected to the connecting pin 12 in a different manner, for instance with a locking screw, through clamping or by means of internal thread which engages external thread of the connecting pin 12. With the aid of a fastening means 44, such as a bolt or nut, provided with thread which is designed for cooperation with the thread of the connecting pin 12, the housing 24, 26 can be pressed against the first flange 42 and thus be secured. Here, the fastening means 44 engages an outside of the housing 24, 26, so that it is not necessary to open the housing 24, 26 to access the fastening means 44. The fastening means 44 is simply accessible from the outside, which makes demounting the lighting unit 22 from the garden light 10 simple.

In one embodiment, of which an example is shown in the Figures, the garden light can be provided with a second flange 45 which extends perpendicularly to the longitudinal centre line L of the connecting pin 12. With the translucent shade 14 in a mounted condition, the top wall 18 of the translucent lampshade 14 can be clamped between the first and the second flange 42, 45. For the second flange 45 too, it holds that it can be fixedly connected to the connecting pin 12, but it can also be connected to the connecting pin 12 in a different manner, for instance with a locking screw, by clamping or by means of internal thread which engages external thread of the connecting pin 12.

In an alternative embodiment, the second flange 45 may be omitted and the top wall 18 of the translucent lampshade 14 can be clamped between the housing 24, 26 and the first flange 42.

As already indicated, in one embodiment, the connecting pin 12 can be provided with external thread. With such an embodiment, from the viewpoint of easy assembly, it is advantageous when the fastening means 44 and the first flange 42 are each provided with internal thread that is suitable for engaging the external thread of the connecting pin 12. When, with such an embodiment, use is also made of a second flange 45, this is preferably also provided with internal thread suitable for engaging the external thread of the connecting pin 12.

In one embodiment, the outer wall 16 of the lampshade 14 extends in an imaginary conical plane and the top wall 18 has a circular outer circumference. It is clear that also lampshades with different shapes fall within the framework of the invention.

The housing 24, 26 can be designed as a substantially cylindrical box whose diameter is relatively large relative to the height. This has the advantage that the top surface of the housing 24, 26 is relatively large, so that a relatively large surface is available for capturing light on the solar cell assembly 32. This form, for that matter, can also be used with other than conically designed translucent lampshades 14.

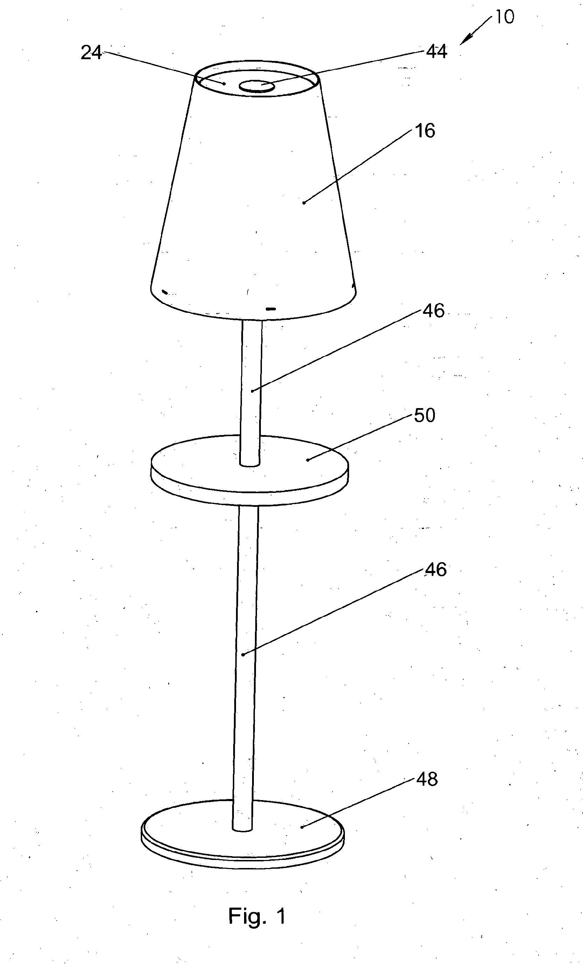

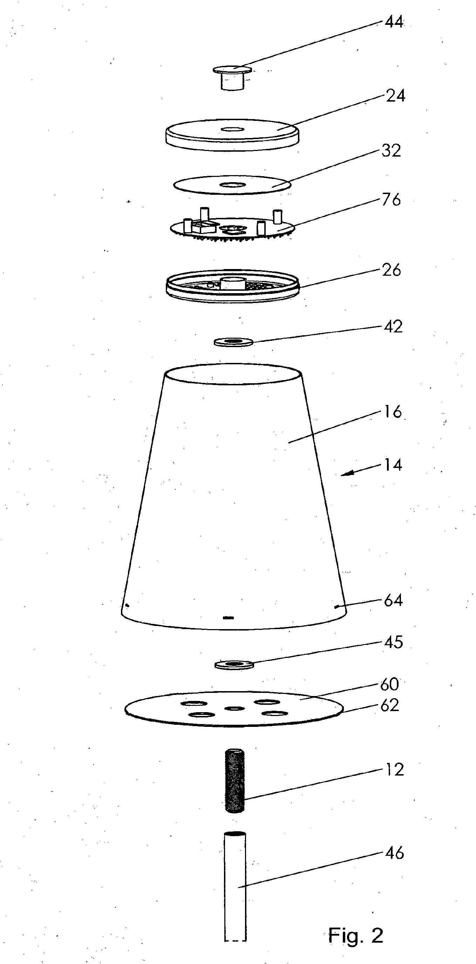

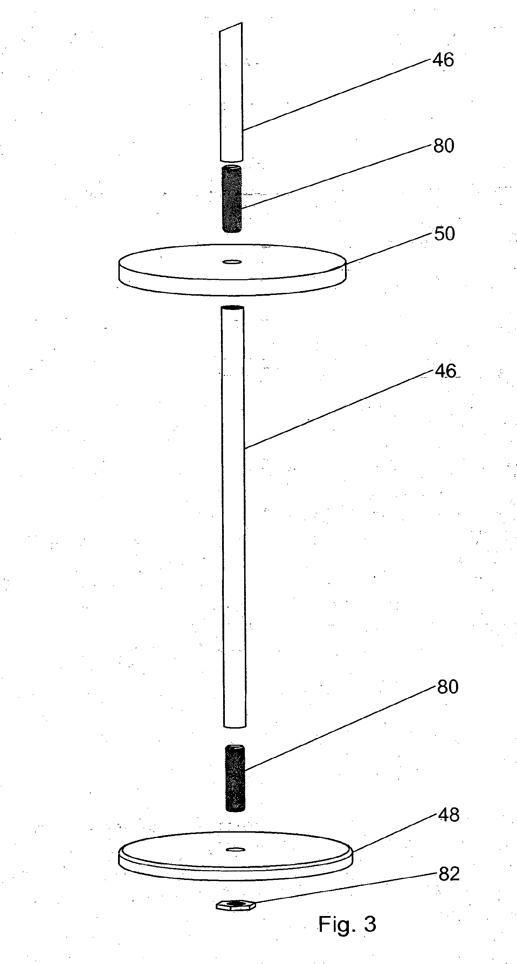

In one embodiment, of which an example is shown in Figures 1-3, the garden light can be provided with an upright 46 which is connectable at a top end to the connecting pin 12. In one embodiment, of which an example is shown in Figures 1 - 3, the garden light is provided with a foot 48 which is connected to a lower end of the upright 46. In order to compactly package and ship the garden light, it is preferred that the foot 48 is detachably connected to the lower end of the upright 46.

The upright 46 can be built up from several parts, as is shown in the example of Figures 1 - 3, and has a height in the range of 1 - 2 m for forming a standing lamp. In one embodiment, the garden light can be provided with a tabletop 50 which is connected to the upright 46 at a height in the range of 0.4 - 1.0 meter.

In an alternative embodiment, the upright 46 may have a height in the range of 0 - 0.60 m for forming a table lamp.

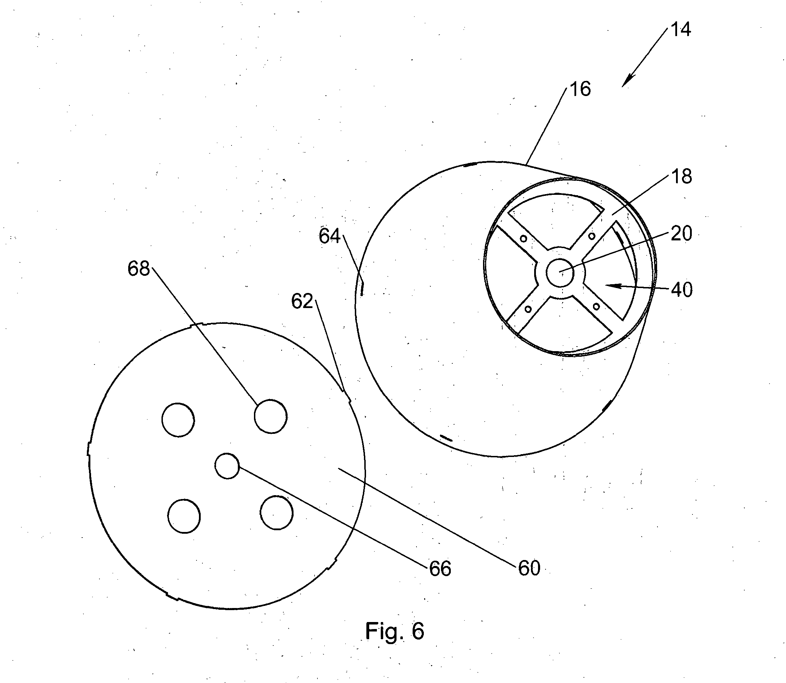

Fig. 6 shows an example of an embodiment of the lampshade 14. The lampshade 14 can be provided with a bottom wall 60. For easy attachment of the bottom wall 60 to the outer wall 16, the bottom wall 60 may be provided with lips 62. Outer wall 16 may then be provided with recesses 64 which correspond to the lips 62, such that the lips 62 of the bottom wall 60 can be inserted into the recesses 64 of the outer wall 16 for attaching the bottom wall 60 to the outer wall 16.

For passing, for instance, the upright 46, the bottom wall 60 can be provided with a central opening 66. For optimizing the downward light yield, the bottom wall 60 can be provided with a number of light passing openings 68.

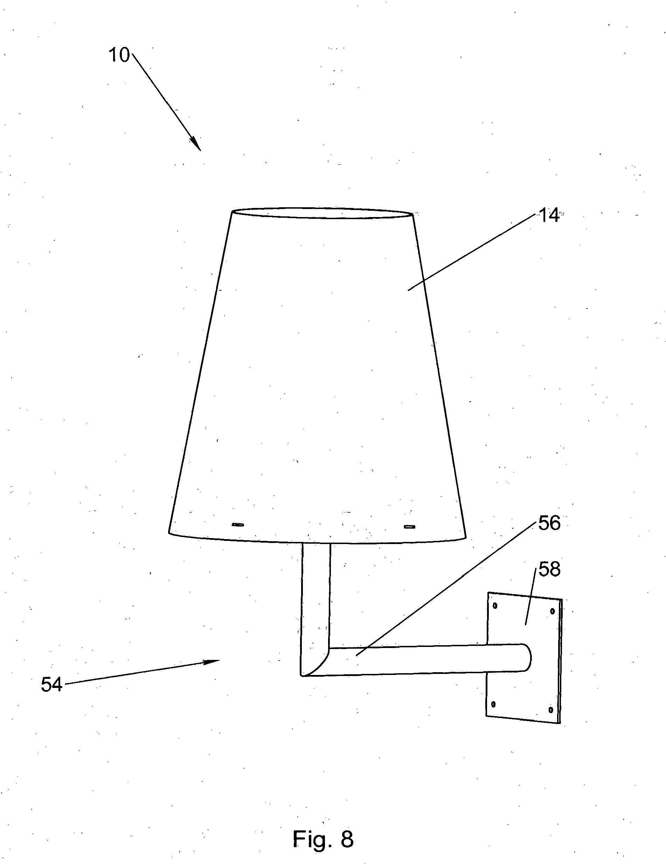

Instead of or in addition to an upright 46, the garden light can also be provided with a suspension provision 52. This suspension provision 52, of which an example is shown in Figure 8, can be designed as a hook or eye connected to the fastening means 44.

Figure 8 shows an example of an embodiment of the garden light which is provided with a wall mounting provision 54 comprising a carrier 56 which in a mounted condition of the garden light is connected to the connecting pin 12, and a wall plate 58 which is connected to the carrier 56 and which is configured to be mounted on a wall.

In an exemplary embodiment, the garden light can be provided with a charging unit (not shown) which is connectable to the lighting unit 22 for charging the battery 30 thereof. Optionally, the lighting unit 22 can be taken from the garden light for connecting it to the charging unit. To further simplify this, a compression spring can be included between the first flange 42 and the lighting unit 22. When the fastening means 44 is loosened, the lighting unit 22 is pushed upward by the compression spring to above the upper edge of the translucent lampshade 14 so that it can be simply engaged by the user to be taken from the garden light. In the embodiment having the two flanges 42, 45, the lampshade 14 simply remains fixedly connected to the connecting pin 12, which, of course, is advantageous.

In one embodiment, the garden light 10 can be provided with a remote control for switching the LEDs 34 on and off.

In a further embodiment, the circuit 36 that connects the battery 30 to the LEDs 34 can be provided with a dimmer functionality, so that the light intensity of the LEDs 34 can be controlled. It will be clear that with such an embodiment, also a remote control can be involved which is suitable not only for switching the LEDs 34 on and off, but also for controlling the light intensity of the LEDs 34.

The invention is not limited to the described exemplary embodiments. Various modifications within the scope as defined by the claims are within possibility. The various described embodiments can be utilized independently of each other or in combination with each other. The reference numerals included in the claims do not limit the claims.

## Claims

1. A garden light (10) provided with:
• a connecting pin (12) which is provided adjacent one end with internal or external thread;
• a first flange (42) which extends perpendicularly to a longitudinal centre line (L) of the connecting pin (12);
• a translucent lampshade (14) with a translucent outer wall (16);
• a housing (24, 26);
• a battery (30) which is included in the housing (24, 26);
• a solar cell assembly (32) provided adjacent an upper side of the housing (24, 26);
• a number of LEDs (34) provided in or at a lower side of the housing (24, 26);
• a circuit (36) which is included in the housing (24, 26) and which connects the LEDs (34) to the battery (30) and which is designed for switching the LEDs (34) on and off;
• a circuit (38) which is included in the housing (24, 26) and which connects the solar cell assembly (32) to the battery (30) and which is designed for controlling the charging of the battery (30) with the aid of the solar cell assembly (32);
**characterized in that** the housing (24, 26) with the battery (30) included therein, the solar cell assembly (32), the number of LEDs (34), the circuit (36) for switching the LEDs (34) on and off and the circuit (38) for controlling the charging of the battery (30) together form a lighting unit (22), wherein the lighting unit (22) is provided with a central through opening (28) in the housing (24, 26) which extends through the entire housing (24, 26), wherein the lampshade (14) is provided with a top wall (18) which is connected to the translucent outer wall (16) and which is provided with a central opening (20) designed for receiving the connecting pin (12), wherein in a mounted condition the connecting pin (12) extends through the central through opening (28) in the housing (24, 26) and through the central opening (20) in the top wall (18) for connection of the lighting unit (22) and the lampshade (14) to the connecting pin (12), wherein the garden light is provided with a fastening means (44), such as a bolt or nut, provided with thread which is designed for cooperation with the thread of the connecting pin (12) and which engages an outside of the housing (24, 26) of the lighting unit (22) for pressing the lighting unit (22) against the first flange (42).

2. The garden light according to claim 1, wherein in a mounted condition the lighting unit (22) is positioned above the top wall (18), wherein the top wall (18) is provided with recesses (40) whose positions correspond to the positions of the LEDs (34) on the housing (24, 26) of the lighting unit (22), such that the LEDs (34) shine directly into the space which is located below the top wall (18) and which is surrounded by the outer wall (16) of the lampshade (14).

3. The garden light according to claim 1, comprising:
- a second flange (45) which extends perpendicularly to the longitudinal centre line (L) of the connecting pin (12);
wherein, in a mounted condition of the translucent shade (14), the top wall (18) of the translucent lampshade (14) is clamped between the first and the second flange (42, 44).

4. The garden light according to any one of the preceding claims, wherein the connecting pin (12) is provided with external thread.

5. The garden light comprising the subject matter of claim 4, wherein the fastening means (44) and the first flange (42) are each provided with internal thread which is suitable for engaging the external thread of the connecting pin (12).

6. The garden light comprising the subject matter of claims 3 and 5, wherein the second flange (45) is provided with internal thread which is suitable for engaging the external thread of the connecting pin (12).

7. The garden light according to any one of the preceding claims, wherein the outer wall (16) of the lampshade (14) extends in an imaginary conical plane and wherein the top wall (18) has a circular outer circumference, the housing (24, 26) being designed as a substantially cylindrical box whose diameter is relatively large relative to the height.

8. The garden light according to any one of the preceding claims, provided with an upright (46) which is connectable at a top end to the connecting pin (12).

9. The garden light according to claim 8, provided with a foot (48) which is connected to a lower end of the upright (46).

10. The garden light according to any one of the preceding claims, wherein the lampshade (14) is provided with a bottom wall (60).

11. The garden light according to claim 10, wherein the bottom wall (60) is provided with lips (62) and wherein the outer wall (16) is provided with recesses (64) which correspond with the lips (62), such that the lips (62) of the bottom wall (60) can be inserted into the recesses (64) of the outer wall (16) for fastening the bottom wall (60) to the outer wall (16).

12. The garden light according to claim 10 or 11, wherein the bottom wall (60) is provided with a central opening (66).

13. The garden light according to any one of claims 10-12, wherein the bottom wall (60) is provided with a number of light passing openings (68).

14. The garden light according to any one of the preceding claims, provided with a charging unit which is connectable to the lighting unit (22) for charging the battery (30) thereof.

15. The garden light according to any one of the preceding claims, provided with a remote control for switching the LEDs (34) on and off.

16. The garden light according to any one of the preceding claims, wherein the circuit (36) which connects the battery (30) to the LEDs (34) is provided with a dimmer functionality, so that the light intensity of the LEDs (34) can be controlled.

17. The garden light provided with the combination of features of claims 15 and 16, wherein the remote control is also configured for controlling the light intensity of the LEDs (34).

## Patentansprüche

1. Gartenleuchte (10), bereitgestellt mit:
• einem Verbindungsstift (12), der angrenzend an ein Ende mit Innen- oder Außengewinde bereitgestellt ist;
• einem ersten Flansch (42), der senkrecht zu einer Längsmittellinie (L) des Verbindungsstiftes (12) verläuft;
• einem lichtdurchlässigen Lampenschirm (14) mit einer lichtdurchlässigen äußeren Wand (16);
• einem Gehäuse (24, 26);
• einer Batterie (30), die in dem Gehäuse (24, 26) enthalten ist;
• einer Solarzellenanordnung (32), bereitgestellt angrenzend an eine Oberseite des Gehäuses (24, 26);
• einer Anzahl LEDs (34), bereitgestellt in oder an einer Unterseite des Gehäuses (24, 26);
• einem Schaltkreis (36), der in dem Gehäuse (24, 26) enthalten ist und der die LEDs (34) mit der Batterie (30) verbindet und der konzipiert ist, um die LEDs (34) ein- und auszuschalten;
• einem Schaltkreis (38), der in dem Gehäuse (24, 26) enthalten ist und der die Solarzellenanordnung (32) mit der Batterie (30) verbindet und der konzipiert ist, um das Aufladen der Batterie (30) mithilfe der Solarzellenanordnung (32) zu steuern;
**dadurch gekennzeichnet, dass** das Gehäuse (24, 26) mit der darin enthaltenen Batterie (30), die Solarzellenanordnung (32), die Anzahl LEDs (34), der Schaltkreis (36) zum Ein- und Ausschalten der LEDs (34) und der Schaltkreis (38) zum Steuern der Aufladung der Batterie (30) zusammen eine Beleuchtungseinheit (22) bilden, wobei die Beleuchtungseinheit (22) mit einer zentralen Durchgangsöffnung (28) in dem Gehäuse (24, 26) versehen ist, die durch das gesamte Gehäuse (24, 26) verläuft, wobei der Lampenschirm (14) mit einer oberen Wand (18), die mit der lichtdurchlässigen äußeren Wand (16) verbunden ist, versehen ist und die mit einer zentralen Öffnung (20), konzipiert zum Aufnehmen des Verbindungsstiftes (12), versehen ist, wobei in einem montierten Zustand der Verbindungsstift (12) durch die zentrale Durchgangsöffnung (28) in dem Gehäuse (24, 26) und durch die zentrale Öffnung (20) in der oberen Wand (18) verläuft, um die Beleuchtungseinheit (22) und den Lampenschirm (14) mit dem Verbindungsstift (12) zu verbinden, wobei die Gartenleuchte versehen ist mit einem Befestigungsmittel (44) wie beispielsweise einer Schraube oder Mutter, versehen mit einem Gewinde, das konzipiert ist, um mit dem Gewinde des Verbindungsstiftes (12) zusammenzuarbeiten und das an einer Außenseite des Gehäuses (24, 26) der Beleuchtungseinheit (22) eingreift, um die Beleuchtungseinheit (22) gegen den ersten Flansch (42) zu drücken.

2. Gartenleuchte nach Anspruch 1, wobei in einem montierten Zustand die Beleuchtungseinheit (22) über der oberen Wand (18) positioniert ist, wobei die obere Wand (18) mit Vertiefungen (40) versehen ist, deren Positionen mit den Positionen der LEDs (34) auf dem Gehäuse (24, 26) der Beleuchtungseinheit (22) übereinstimmen, sodass die LEDs (34) direkt in den Raum leuchten, der unter der oberen Wand (18) angeordnet ist und der von der äußeren Wand (16) des Lampenschirms (14) umgeben ist.

3. Gartenleuchte nach Anspruch 1, umfassend:
- einen zweiten Flansch (45), der senkrecht zu der Längsmittellinie (L) des Verbindungsstiftes (12) verläuft;
wobei in einem montierten Zustand des lichtdurchlässigen Schirms (14) die obere Wand (18) des lichtdurchlässigen Lampenschirms (14) zwischen den ersten und den zweiten Flansch (42, 44) geklemmt wird.

4. Gartenleuchte nach einem der vorhergehenden Ansprüche, wobei der Verbindungsstift (12) mit Außengewinde bereitgestellt ist.

5. Gartenleuchte, umfassend den Gegenstand nach Anspruch 4, wobei die Befestigungsmittel (44) und der erste Flansch (42) jeweils mit Innengewinde bereitgestellt sind, das geeignet ist, um in das Außengewinde des Verbindungsstiftes (12) einzugreifen.

6. Gartenleuchte, umfassend den Gegenstand nach den Ansprüchen 3 und 5, wobei der zweite Flansch (45) mit Innengewinde bereitgestellt ist, das geeignet ist, in das Außengewinde des Verbindungsstiftes (12) einzugreifen.

7. Gartenleuchte nach einem der vorhergehenden Ansprüche, wobei die äußere Wand (16) des Lampenschirms (14) in einer gedachten konischen Ebene verläuft und wobei die obere Wand (18) einen kreisförmigen Außenumfang hat, wobei das Gehäuse (24, 26) als eine im Wesentlichen zylindrische Box konzipiert ist, deren Durchmesser verhältnismäßig groß ist im Verhältnis zur Höhe.

8. Gartenleuchte nach einem der vorhergehenden Ansprüche, versehen mit einem Ständer (46), der an einem oberen Ende mit dem Verbindungsstift (12) verbunden werden kann.

9. Gartenleuchte nach Anspruch 8, versehen mit einem Fuß (48), der mit einem unteren Ende des Ständers (46) verbunden werden kann.

10. Gartenleuchte nach einem der vorhergehenden Ansprüche, wobei der Lampenschirm (14) mit einer unteren Wand (60) versehen ist.

11. Gartenleuchte nach Anspruch 10, wobei die untere Wand (60) mit Lippen (62) versehen ist und wobei die äußere Wand (16) mit Vertiefungen (64) versehen ist, die mit den Lippen (62) übereinstimmen, sodass die Lippen (62) der unteren Wand (60) in die Vertiefungen (64) der äußeren Wand (16) eingesetzt werden können, um die untere Wand (60) an der äußeren Wand (16) zu befestigen.

12. Gartenleuchte nach Anspruch 10 oder 11, wobei die untere Wand (60) mit einer zentralen Öffnung (66) versehen ist.

13. Gartenleuchte nach einem der Ansprüche 10-12, wobei die untere Wand (60) mit einer Anzahl von lichtpassierenden Öffnungen (68) versehen ist.

14. Gartenleuchte nach einem der vorhergehenden Ansprüche, versehen mit einer Ladeeinheit, die mit der Beleuchtungseinheit (22) verbunden werden kann, um deren Batterie (30) aufzuladen.

15. Gartenleuchte nach einem der vorhergehenden Ansprüche, bereitgestellt mit einer Fernbedienung zum Ein- und Ausschalten der LEDs (34).

16. Gartenleuchte nach einem der vorhergehenden Ansprüche, wobei der Schaltkreis (36), der die Batterie (30) mit den LEDs (34) verbindet, mit einer Dimmerfunktion versehen ist, sodass die Lichtintensität der LEDs (34) gesteuert werden kann.

17. Gartenleuchte, versehen mit der Kombination an Merkmalen nach den Ansprüchen 15 und 16, wobei die Fernbedienung auch konfiguriert ist, um die Lichtintensität der LEDs (34) zu steuern.

## Revendications

1. Lumière de jardin (10) munie :
- d'une tige de liaison (12) prévue de manière adjacente à une extrémité, avec un filetage interne ou externe ;
- d'une première bride (42) qui s'étend perpendiculairement à une ligne centrale longitudinale (L) de la tige de liaison (12) ;
- d'un abat-jour translucide (14) équipé d'une paroi extérieure translucide (16) ;
- d'un logement (24, 26) ;
- d'une batterie (30) incluse dans le logement (24, 26) ;
- d'une pile solaire (32) prévue de manière adjacente à un côté supérieur du logement (24, 26) ;
- de plusieurs LED (34) prévues dans ou au niveau d'un côté inférieur du logement (24, 26) ;
- d'un circuit (36) inclus dans le logement (24, 26), et qui relie les LED (34) à la batterie (30), et qui est conçu pour allumer et éteindre les LED (34) ;
- d'un circuit (38) inclus dans le logement (24, 26), et qui relie la pile solaire (32) à la batterie (30), et qui est conçu pour contrôler le chargement de la batterie (30) à l'aide de la pile solaire (32) ;
**caractérisée en ce que** le logement (24, 26) muni de la batterie (30), la pile solaire (32), les LED (34), le circuit (36) d'allumage et d'extinction des LED (34), et le circuit (38) de contrôle du chargement de la batterie (30) forment ensemble une unité d'éclairage (22), l'unité d'éclairage (22) étant munie d'une ouverture centrale (28) dans le logement (24, 26), qui s'étend dans la totalité du logement (24, 26), et l'abat-jour (14) étant muni d'une paroi supérieure (18) reliée à la paroi extérieure translucide (16), et qui est munie d'une ouverture centrale (20) conçue pour recevoir la tige de liaison (12), dans laquelle, en position de montage, la tige de liaison (12) s'étend dans l'ouverture centrale (28) dans le logement (24, 26), et dans l'ouverture centrale (20) au sein de la paroi supérieure (18), afin de relier l'unité d'éclairage (22) et l'abat-jour (14) à la tige de liaison (12), la lumière de jardin étant munie d'un moyen de fixation (44), tel qu'un boulon ou un écrou, équipé d'un filetage conçu pour coopérer avec le filetage de la tige de liaison (12), et qui engage l'extérieur du logement (24, 26) de l'unité d'éclairage (22) afin d'appuyer l'unité d'éclairage (22) contre la première bride (42).

2. Lumière de jardin selon la revendication 1, dans laquelle, en position de montage, l'unité d'éclairage (22) est positionnée au-dessus de la paroi supérieure (18), la paroi supérieure (18) étant munie de renfoncements (40) dont les positions correspondent à celles des LED (34) sur le logement (24, 26) de l'unité d'éclairage (22), de sorte que les LED (34) éclairent directement dans l'espace qui se trouve sous la paroi supérieure (18) et qui est entouré par la paroi extérieure (16) de l'abat-jour (14).

3. Lumière de jardin selon la revendication 1, qui comprend :
- une seconde bride (45) qui s'étend perpendiculairement à la ligne centrale longitudinale (L) de la tige de liaison (12) ;
dans laquelle, en position de montage de l'abat-jour translucide (14), la paroi supérieure (18) de l'abat-jour translucide (14) est serrée entre la première et la seconde brides (42, 44).

4. Lumière de jardin selon l'une quelconque des revendications précédentes, dans laquelle la tige de liaison (12) est munie d'un filetage externe.

5. Lumière de jardin selon la revendication 4, dans laquelle le moyen de fixation (44) et la première bride (42) sont chacun munis d'un filetage externe qui est adapté pour engager le filetage externe de la tige de liaison (12).

6. Lumière de jardin selon les revendications 3 et 5, dans laquelle la seconde bride (45) est munie d'un filetage interne qui est adapté pour engager le filetage externe de la tige de liaison (12).

7. Lumière de jardin selon l'une quelconque des revendications précédentes, dans laquelle la paroi extérieure (16) de l'abat-jour (14) s'étend sur un plan conique imaginaire, et dans laquelle la paroi supérieure (18) possède une circonférence extérieure circulaire, le logement (24, 26) étant conçu comme un boîtier sensiblement cylindrique dont le diamètre est relativement grand par rapport à la hauteur.

8. Lumière de jardin selon l'une quelconque des revendications précédentes, munie d'un montant (46) qui peut être relié, au niveau d'une extrémité supérieure, à la tige de liaison (12).

9. Lumière de jardin selon la revendication 8, munie d'un pied (48) qui est relié à une extrémité inférieure du montant (46).

10. Lumière de jardin selon l'une quelconque des revendications précédentes, dans laquelle l'abat-jour (14) est muni d'une paroi inférieure (60).

11. Lumière de jardin selon la revendication 10, dans laquelle la paroi inférieure (60) est munie de rebords (62), et dans laquelle la paroi extérieure (16) est munie de renfoncements (64) qui correspondent aux rebords (62), de sorte que les rebords (62) de la paroi inférieure (60) puissent être insérés dans les renfoncements (64) de la paroi extérieure (16) afin de fixer la paroi inférieure (60) sur la paroi extérieure (16).

12. Lumière de jardin selon la revendication 10 ou 11, dans laquelle la paroi inférieure (60) est munie d'une ouverture centrale (66).

13. Lumière de jardin selon l'une quelconque des revendications 10 à 12, dans laquelle la paroi inférieure (60) est munie de plusieurs ouvertures qui laissent passer la lumière (68).

14. Lumière de jardin selon l'une quelconque des revendications précédentes, munie d'une unité de chargement qui peut être reliée à l'unité d'éclairage (22) afin de charger la batterie (30) de celle-ci.

15. Lumière de jardin selon l'une quelconque des revendications précédentes, munie d'une télécommande destinée à allumer et éteindre les LED (34).

16. Lumière de jardin selon l'une quelconque des revendications précédentes, dans laquelle le circuit (36) qui relie la batterie (30) aux LED (34) est muni d'une fonctionnalité de variateur, de sorte que l'intensité lumineuse des LED (34) puisse être contrôlée.

17. Lumière de jardin munie de la combinaison de fonctionnalités selon les revendications 15 et 16, dans laquelle la télécommande est également configurée pour contrôler l'intensité lumineuse des LED (34).
